# EUROPÄISCHE PATENTSCHRIFT

(11) **EP 2 034 845 B1**
(45) Veröffentlichungstag und Bekanntmachung des Hinweises auf die Patenterteilung: **16.11.2011**
(21) Anmeldenummer: 07729058.3
(22) Anmeldetag: 14.05.2007
(51) Int. Cl.: A22B 5/08, A22C 21/02

(54) **PEITSCHE, INSBESONDERE DOPPELPEITSCHE, ALS TEIL EINER SCHLACHTLINIE**
WHIP, ESPECIALLY DOUBLE WHIP, AS PART OF A SLAUGHTERING LINE
FOUET, NOTAMMENT FOUET DOUBLE, FAISANT PARTIE D'UNE LIGNE D'ABATTAGE

(30) Priorität: 21.06.2006 DE 102006028477
(43) Veröffentlichungstag der Anmeldung: 18.03.2009
(73) Patentinhaber: ContiTech Vibration Control GmbH, 30165 Hannover (DE)
(72) Erfinder: MEIER, Ernst-August, 31162 Salzdetfurth (DE); NAGORNY, Peter, 21218 Seevetal (DE)
(74) Vertreter: Finger, Karsten
(86) Internationale Anmeldenummer: PCT/EP2007/054606
(87) Internationale Veröffentlichungsnummer: WO 2007/147684

(56) Entgegenhaltungen:
- WO-A-92/09205
- WO-A1-95/05745
- US-A- 994 523
- US-A- 2 559 001
- US-A- 3 108 317

## Beschreibung

Die Erfindung betrifft eine Peitsche, insbesondere Doppelpeitsche, als Teil einer Schlachtlinie, umfassend wenigstens:
- einen Peitschenbereich sowie
- einen Kopfbereich, der in Kontakt steht mit einer Maschinenwelle.

Doppelpeitschen wie auch Enthaarungsschläger sind Teile einer Schlachtlinie, wo neben metallischen Bauteilen auch polymere Werkstoffe zur Anwendung gelangen. Diesbezüglich wird beispielsweise auf folgende Druckschriften verwiesen: EP 0 665 717 B1, US 1 502 749 und US 2 604 656.

Doppelpeitschen werden auf den Großschlachthöfen in der Maschine auf eine Welle aufgefädelt. Bei Ausfall einer Peitsche musste bislang der ganze Peitschenstrang demontiert und wieder neu montiert werden.

Im Hintergrund der hier geschilderten Problematik besteht die Aufgabe der Erfindung darin, eine von außen montierbare Peitsche, insbesondere Doppelpeitsche, bereit zu stellen.

Gelöst wird diese Aufgabe dadurch, dass im Rahmen einer Hart-Weich-Kombination der Peitschenbereich aus einem weichen polymeren Werkstoff und der Kopfbereich aus einem harten sowie schlagzähen polymeren Werkstoff bestehen, wobei der Peitschenbereich und Kopfbereich innerhalb ihres Verbindungsbereiches stoffschlüssig miteinander verbunden sind.

Dadurch dass der Kopfbereich als Aufnahme- bzw. Anbindungskopf (in Bezug auf die Maschinenwelle) aus hartem Kunststoff gebildet ist, kann dieser Peitschenkopf so gestaltet werden, dass eine leichte Montage bzw. Demontage gewährleistet ist.

Der Peitschenbereich kann aus elastomerem Werkstoff auf der Basis vulkanisierter Kautschukmischungen bestehen, wobei insbesondere folgende Kautschukkomponenten zu nennen sind:
Ethylen-Propylen-Dien-Mischpolymerisat (EPDM)
Nitrilkautschuk (NBR)
Silikonkautschuk
Butylkautschuk (IIR)
Chlorbutylkautschuk (CIIR)
Brombutylkautschuk (BIIR)

Auch Verschnitte, insbesondere ein EPDM/NBR-Verschnitt, können eingesetzt werden. Besonders zweckmäßig ist es, wenn der Peitschenbereich aus einem thermoplastischen Elastomer (TPE) besteht, wobei im Folgenden etwas näher auf die diesbezügliche Werkstofftechnologie eingegangen wird.

Es können thermoplastische Elastomere auf Styrolbasis (TPE-S), unvernetzte oder teilvernetzte thermoplastische Elastomere auf Olefinbasis (TPE-O) oder vollvernetzte thermoplastische Elastomere auf Olefinbasis (TPE-V) zur Anwendung kommen. Weiterhin sind thermoplastische Elastomere auf der Basis eines Verschnittes aus einem thermoplastischen Kunststoff und einem mindestens teilvernetzten Kautschuk, insbesondere auf Basis von EPDM, einsetzbar.

Hinsichtlich des harten Kopfbereiches werden insbesondere folgende Werkstoffe verwendet:
Polyethylen (PE), insbesondere ein Polyethylen mit hoher Dichte (HD-PE)
Polypropylen (PP)
Polyphenylenether (PPE; Marke "Vestoran" der Firma Hüls)

Der Peitschenbereich und/oder der Kopfbereich kann/können zudem mit einem eingebetteten Festigkeitsträger versehen sein.

Beim Peitschenbereich besteht der Festigkeitsträger aus einem ein- oder mehrlagigen Gewebe. Alternativ können Fasern als Verstärkungsmittel eingesetzt werden, wobei hier insbesondere Polyester, Polyamid, Aramid oder Baumwolle zu nennen sind.

Beim Kopfbereich steht die Faserverstärkung im Vordergrund, insbesondere die Glasfaserverstärkung.

Die Fasern sind innerhalb des polymeren Werkstoffes von Peitschenbereich und Kopfbereich fein verteilt.

Der Peitschenbereich und/oder der Kopfbereich, insbesondere Peitschenbereich, kann/können zudem mikrobenbeständig ausgerüstet sein. Dies bedeutet, dass dem polymeren Werkstoff ein aktiver Inhibitor beigemischt ist, der die Vermehrung von Mikroorganismen (Bakterien, Mikroben) verhindert. Der Inhibitor ist dabei zweckmäßigerweise schwerlöslich in Wasser. Auf diese Weise wird verhindert, dass der Inhibitor heraus gewaschen wird.

Besonders wirksame Inhibitoren, auch unter dem Aspekt der oben genannten Schwerlöslichkeit, sind:
2,4,4'-trichlor-2'-hydroxy-diphenyl-ether
N'-tert.butyl-N-cyclopropyl-6-(methylthio)-1,2,5-triazin-2,4-diamin
Diesbezüglich wird auf die Technologie der Klärbeckenmembran verwiesen
(DE 102 58 551 A1).

Der Peitschenbereich und der Kopfbereich sind mittels eines chemisch wirkenden Haftmittels miteinander stoffschlüssig verbunden.

Die Erfindung wird nun anhand von Ausführungsbeispielen unter Bezugnahme auf schematische Zeichnungen erläutert. Es zeigen:
- Fig. 1: eine Doppelpeitsche mit Peitschen- und Kopfbereich;
- Fig. 2: den Längsschnitt einer Peitsche gemäß Fig. 1;
- Fig. 3: den Verbindungsbereich von Peitschen- und Kopfbereich;
- Fig. 4/5: Details des Kopfbereiches in Verbindung mit der Aufnahmemöglichkeit einer Buchse.

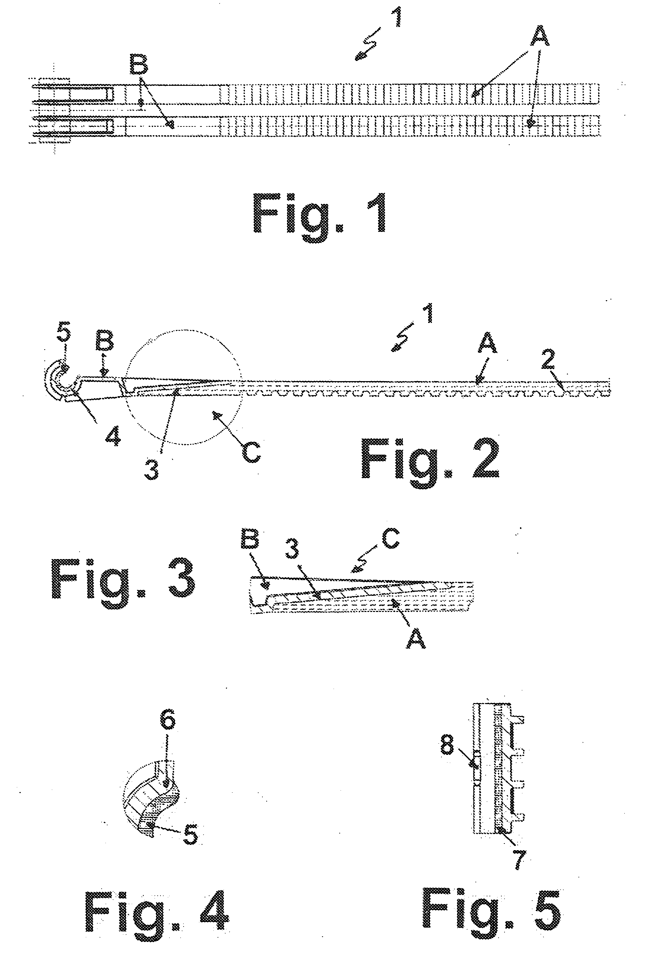

Nach Fig. 1 umfasst die Doppelpeitsche **1** einen Peitschenbereich **A** aus einem weichen polymeren Werkstoff (z.B. TPE) und einen Kopfbereich **B** aus einem harten sowie schlagzähen polymeren Werkstoff (z.B. PP).

Nach Fig. 2 ist der Peitschenbereich **A** der Doppelpeitsche **1** innerhalb seines Schlag- bzw. Wirkbereiches mit einem Rippen-Rillen-System **2** versehen. Der Kopfbereich **B,** der frei ist von einem derartigen Rippen-Rillen-System, steht in Kontakt mit der Maschinenwelle. Innerhalb des Anbindungsbereiches mit der Maschinenwelle ist der Kopfbereich mit einer Mulde **4** mit im Wesentlichen rohrförmiger Konstruktion für die Aufnahme einer Buchse 5 versehen. Der Kopfbereich **B,** die Buchse 5 und die Maschinenwelle bilden eine bauliche Gesamteinheit. Der Anbindungsbereich **C** mit der Haftkontaktfläche **3** von Peitschen- und Kopfbereich wird nun in Verbindung mit der Fig. 3 näher vorgestellt.

Fig. 3 zeigt den Verbindungsbereich C von Peitschenbereich **A** und Kopfbereich **B.** Der Verbindungsbereich ist dabei durch Keilbildung so gestaltet, dass eine große Haftkontaktfläche **3** entsteht. Auf diese Weise gehen der Peitschen- und Kopfbereich im Zusammenhang mit einem chemischen Haftmittel eine unlösbare Verbindung ein. Eine zusätzliche mechanische Verbindung ist nicht erforderlich.

Nach Fig. 4 ist der Kopfbereich **B** mit einer Verdrehsicherung **6** für die Buchse **5** ausgestattet. Die Geometrie ist dabei so ausgeführt, dass die Buchse beim Eindrücken automatisch in die richtige Position fällt und sich im Betrieb nicht verdrehen kann. Fig. 5 zeigt eine zusätzliche Sicherung 7 der Buchse gegen Herausfallen, wobei die Buchse beidseitig mit einem Bund versehen ist. Außerdem weist die Buchse eine Aussparung **8** auf, um zur Demontage ein Werkzeug ansetzten zu können.

### Bezugszeichenliste

- **1**: Doppelpeitsche
- **2**: Rippen-Rillen-System
- **3**: Haftkontaktfläche
- **4**: Mulde
- **5**: Buchse
- **6**: Verdrehsicherung
- **7**: zusätzliche Sicherung
- **8**: Aussparung
- **A**: Peitschenbereich
- **B**: Kopfbereich
- **C**: Verbindungsbereich von Peitschen- und Kopfbereich

## Patentansprüche

1. Peitsche, insbesondere Doppelpeitsche (1), als Teil einer Schlachtlinie, umfassend wenigstens:
- einen Peitschenbereich (A) sowie
- einen Kopfbereich (B), der in Kontakt steht mit einer Maschinenwelle;
**dadurch gekennzeichnet, dass** im Rahmen einer Hart-Weich-Kombination der Peitschenbereich (A) aus einem weichen polymeren Werkstoff und der Kopfbereich (B) aus einem harten sowie schlagzähen polymeren Werkstoff bestehen, wobei der Peitschenbereich und Kopfbereich innerhalb ihres Verbindungsbereiches (C) stoffschlüssig miteinander verbunden sind.

2. Peitsche nach Anspruch 1, **dadurch gekennzeichnet, dass** der Peitschenbereich (A) aus einem elastomeren Werkstoff oder einem thermoplastischen Elastomer bzw. TPE besteht.

3. Peitsche nach Anspruche 1 oder 2, **dadurch gekennzeichnet, dass** der Peitschenbereich (A) mit einem eingebetteten Festigkeitsträger versehen ist.

4. Peitsche nach Anspruch 3, **dadurch gekennzeichnet, dass** der Festigkeitsträger aus einem ein- oder mehrlagigen Gewebe oder aus Fasern besteht.

5. Peitsche nach Anspruch 4, **dadurch gekennzeichnet, dass** die Fasern aus Polyester, Polyamid, Aramid oder Baumwolle bestehen.

6. Peitsche nach einem der Ansprüche 1 bis 5, **dadurch gekennzeichnet, dass** der Peitschenbereich (A) innerhalb seines Schlag- bzw. Wirkbereiches mit einem Rippen-Rillen-System (2) versehen ist.

7. Peitsche nach einem der Ansprüche 1 bis 6, **dadurch gekennzeichnet, dass** der Kopfbereich (B) aus Polyethylen bzw. PE, insbesondere einem Polyethylen mit hoher Dichte bzw. HD-PE, oder aus Polypropylen bzw. PP oder Polyphenylenether bzw. PPE besteht.

8. Peitsche nach einem der Ansprüche 1 bis 7, **dadurch gekennzeichnet, dass** der Kopfbereich (B) mit einem eingebetteten Festigkeitsträger versehen ist.

9. Peitsche nach Anspruch 8, **dadurch gekennzeichnet, dass** der Festigkeitsträger aus Fasern besteht.

10. Peitsche nach Anspruch 9, **dadurch gekennzeichnet, dass** eine Glasfaserverstärkung vorliegt.

11. Peitsche nach einem der Ansprüche 1 bis 10, **dadurch gekennzeichnet, dass** der Peitschenbereich (A) und/oder Kopfbereich (B), insbesondere der Peitschenbereich, mikrobenständig ausgerüstet ist/sind.

12. Peitsche nach einem der Ansprüche 1 bis 11, **dadurch gekennzeichnet, dass** der Peitschenbereich (A) und der Kopfbereich (B) innerhalb ihres Verbindungsbereiches (C) mittels eines chemisch wirkenden Haftmittels miteinander verbunden sind.

13. Peitsche nach einem der Ansprüche 1 bis 12, **dadurch gekennzeichnet, dass** der Verbindungsbereich (C) von Peitschenbereich (A) und Kopfbereich (B) so gestaltet sind, dass eine große Haftkontaktfläche (3) entsteht.

14. Peitsche nach Anspruch 13, **dadurch gekennzeichnet, dass** die große Haftkontaktfläche (3) durch Keilbildung von Peitschenbereich (A) und Kopfbereich (B) entsteht.

15. Peitsche nach einem der Ansprüche 1 bis 14, **dadurch gekennzeichnet, dass** der Kopfbereich (B) mit einer Mulde (4) mit im Wesentlichen rohrförmiger Konstruktion für die Aufnahme einer Buchse (5) versehen ist.

16. Peitsche nach Anspruch 15, **dadurch gekennzeichnet, dass** der Kopfbereich (B) so gestaltet ist, dass eine Verdrehsicherung (6) für die Buchse (5) entsteht.

17. Peitsche nach Anspruch 15 oder 16, **dadurch gekennzeichnet, dass** die Buchse (5) beidseitig mit einem Bund versehen ist, und zwar zwecks zusätzlicher Sicherung (7) der Buchse gegen Herausfallen.

18. Peitsche nach einem der Ansprüche 15 bis 17, **dadurch gekennzeichnet, dass** die Buchse (5) eine Aussparung (8) aufweist, um zur Demontage ein Werkzeug ansetzen zu können.

## Claims

1. Whip, especially a double whip (1), as part of a slaughter line, comprising at least:
- a whip section (A) and
- a head section (B), which is in contact with a machine shaft.
**characterized in that**, within the framework of a hard-soft combination, the whip section (A) consists of a soft polymeric material and the head section (B) consists of a hard and impact-resistant polymeric material, the whip section and head section being integrally joined within their connecting region (C).

2. Whip according to Claim 1, **characterized in that** the whip section (A) consists of an elastomeric material or of a thermoplastic elastomer or TPE.

3. Whip according to Claim 1 or 2, **characterized in that** the whip section (A) is provided with an embedded reinforcement.

4. Whip according to Claim 3, **characterized in that** the reinforcement consists of a single-layered or multilayered fabric or of fibers.

5. Whip according to Claim 4, **characterized in that** the fibers consist of polyester, polyamide, aramid or cotton.

6. Whip according to one of Claims 1 to 5, **characterized in that** the whip section (A) is provided within its impact and working zone with a rib-groove system (2).

7. Whip according to one of Claims 1 to 6, **characterized in that** the head section (B) consists of polyethylene or PE, especially of a high-density polyethylene or HD-PE or of polypropylene or PP or of polyphenyl ether or PPE.

8. Whip according to one of Claims 1 to 7, **characterized in that** the head section (B) is provided with an embedded reinforcement.

9. Whip according to Claim 8, **characterized in that** the reinforcement consists of fibers.

10. Whip according to Claim 9, **characterized in that** a glass fiber reinforcement is present.

11. Whip according to one of Claims 1 to 10, **characterized in that** the whip section (A) and/or the head section (B), especially the whip section, is/are equipped so as to be microbe-resistant.

12. Whip according to one of Claims 1 to 11, **characterized in that** the whip section (A) and the head section (B) are joined within their connecting region (C) by means of a chemically acting adhesive.

13. Whip according to one of Claims 1 to 12, **characterized in that** the connecting region (C) of whip section (A) and head section (B) are shaped such that a large adhesive contact surface (3) is formed.

14. Whip according to Claim 13, **characterized in that** the large adhesive contact surface (3) is formed by the formation of a wedge between the whip section (A) and the head section (B).

15. Whip according to one of Claims 1 to 14, **characterized in that** the head section (B) is provided with a recess (4) of substantially tubular design for the reception of a bushing (5).

16. Whip according to Claim 15, **characterized in that** the head section (B) is shaped such that an anti-twist protection (6) for the bushing (5) is formed.

17. Whip according to Claim 15 or 16, **characterized in that** the bushing (5) is provided on both sides with a collar, to be precise for the purpose of additional protection (7) to prevent the bushing from falling out.

18. Whip according to one of Claims 15 to 17, **characterized in that** the bushing (5) has a cavity (8) to enable a tool to be applied for the removal thereof.

## Revendications

1. Fouet, en particulier fouet double (1), formant partie d'une ligne d'abattage et comprenant au moins :
une partie de fouet (A) et
une partie de tête (B) en contact avec un arbre de machine,
**caractérisé en ce que**
dans le cadre d'une combinaison dureté-mollesse, la partie de fouet (A) est constituée d'un matériau polymère mou et la partie de tête (B) d'un matériau polymère dur et tenace, la partie de fouet et la partie de tête étant reliées l'une à l'autre en correspondance de matière à l'intérieur de leur partie de liaison (C).

2. Fouet selon la revendication 1, **caractérisé en ce que** la partie de fouet (A) est constitué d'un matériau élastomère ou d'un élastomère thermoplastique ou TPE.

3. Fouet selon les revendications 1 ou 2, **caractérisé en ce que** des renforts sont incorporés dans la partie de fouet (A).

4. Fouet selon la revendication 3, **caractérisé en ce que** les renforts sont constitués d'un tissu en une ou plusieurs couches ou de fibres.

5. Fouet selon la revendication 4, **caractérisé en ce que** les fibres sont constituées de polyester, de polyamide, d'aramide ou de coton.

6. Fouet selon l'une des revendications 1 à 5, **caractérisé en ce que** la partie de fouet (A) est dotée d'un système (2) de nervures et rainures dans sa zone de frappe ou d'action.

7. Fouet selon l'une des revendications 1 à 6, **caractérisé en ce que** la partie de tête (B) est constituée de polyéthylène ou PE, en particulier d'un polyéthylène à haute densité ou HD-PE, de polypropylène ou PP ou de poly(éther de phényle) ou PPE.

8. Fouet selon l'une des revendications 1 à 7, **caractérisé en ce qu'**un renfort est incorporé dans la partie de tête (B).

9. Fouet selon la revendication 8, **caractérisé en ce que** le renfort est constitué de fibres.

10. Fouet selon la revendication 9, **caractérisé en ce qu'**il présente un renfort de fibres de verre.

11. Fouet selon l'une des revendications 1 à 10, **caractérisé en ce que** la partie de fouet (A) et/ou la partie de tête (B), et en particulier la partie de fouet, sont rendues résistantes aux microbes.

12. Fouet selon l'une des revendications 1 à 11, **caractérisé en ce que** la partie de fouet (A) et la partie de tête (B) sont reliées l'une à l'autre dans une partie de liaison (C) au moyen d'un adhésif à action chimique.

13. Fouet selon l'une des revendications 1 à 12, **caractérisé en ce que** la zone de liaison (C) entre la partie de fouet (A) et la partie de tête (B) sont configurées de manière à obtenir une grande surface (3) de contact par adhérence.

14. Fouet selon la revendication 13, **caractérisé en ce que** la grande surface (3) de contact par adhérence est obtenue par formation d'un biseau entre la partie de fouet (A) et la partie de tête (B).

15. Fouet selon l'une des revendications 1 à 14, **caractérisé en ce que** la partie de tête (B) est dotée d'une moulure (4) de structure essentiellement tubulaire, destinée à reprendre une douille (5).

16. Fouet selon la revendication 15, **caractérisé en ce que** la partie de tête (B) est configurée de telle sorte que la douille (5) soit empêchée de tourner (6).

17. Fouet selon les revendications 15 ou 16, **caractérisé en ce que** la douille (5) est dotée sur ses deux faces d'un collet, pour encore protéger (7) la douille contre le décollement.

18. Fouet selon l'une des revendications 15 à 17, **caractérisé en ce que** la douille (5) présente une découpe (8) qui permet d'insérer un outil en vue de son démontage.
